Europäisches Patentamt

(19) European Patent Office

Office européen des brevets

(11) Publication number: **0 080 129**

**B1**

(12) **EUROPEAN PATENT SPECIFICATION**

(45) Date of publication of patent specification: **30.12.86**

(51) Int. Cl.⁴: **H 01 M 8/02, H 01 M 8/24**

(21) Application number: **82110458.5**

(22) Date of filing: **12.11.82**

(54) A gas cooler assembly.

(30) Priority: **13.11.81 US 321255**

(43) Date of publication of application:
**01.06.83 Bulletin 83/22**

(45) Publication of the grant of the patent:
**30.12.86 Bulletin 86/52**

(84) Designated Contracting States:
**DE FR GB IT**

(56) References cited:
**EP-A-0 039 237**
**GB-A-1 204 832**
**GB-A-2 025 119**
**US-A-3 589 942**
**US-A-3 801 374**
**US-A-4 115 627**
**US-A-4 233 369**
**US-A-4 301 222**

**PATENTS ABSTRACTS OF JAPAN, vol. 6, no.
234(E-143)1112r, 20th November 1982;**

(73) Proprietor: **Energy Research Corporation
3 Great Pasture Road
Danbury Connecticut 06810 (US)**

(72) Inventor: **Chi, Chang Vum
118 Pocono Road
Brookfield Connecticut 06804 (US)**
Inventor: **Baker, Bernard S.
17 Meadow Drive
Brookfield Center Connecticut 06805 (US)**

(74) Representative: **Abitz, Walter, Dr.-Ing. et al
Abitz, Morf, Gritschneder, Freiherr von
Wittgenstein Postfach 86 01 09
D-8000 München 86 (DE)**

## Description

The invention relates to a gas cooler assembly comprising a first plate having opposing first and second surfaces having a plurality of grooves and a second plate having opposing first and second surfaces, said first surface of said second plate being flat and abutting said second surface of said first plate to form channels for carrying a cooling gas and said second surface of said second plate having a plurality of grooves for carrying a process gas, said first and second plates being comprised of a carbonized material.

Such gas cooler assemblies are used in fuel cell stacks formed by a plate structure. In order to reduce stack height, a further set of grooves for use as process gas channels if provided in each plate opposite the surface containing the cooling grooves. The process gas grooves carrying different process gases are situated in transverse relationship relative to each other. The plates are formed from carbonizable materials as e.g., graphite/resin, in order to realize enhanced electrical and thermal conductivity.

A gas cooler assembly in accordance with the prior art portion of claim 1 is known from US—A—3,801,374. The known gas cooler assembly contains two plates with the grooves in the second surface of the first plate carrying a process gas.

One of the advantages offered by the invention resides in that misalignment problems and attendant losses in conductivity and change in gas flow are avoided by the cooling channels being defined by a flat surface and a grooved surface.

The grooves of the first plate are of dimensions so as to provide the desired degree of cooling.

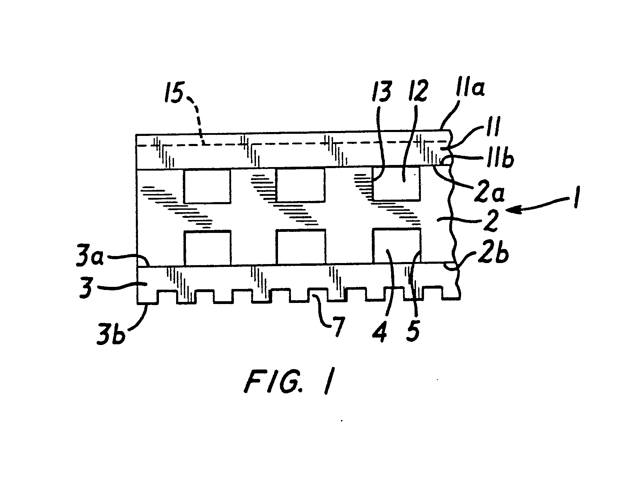

One way of carrying out the invention is described in detail below with reference to Fig. 1 which illustrates only one specific embodiment.

FIG. 1 illustrates a gas cooling assembly 1 in accordance with the principles of the present invention. The assembly 1 comprises a first plate 2 having first and second opposite plate surfaces 2a and 2b and a second and a third plate 3 and 11 having opposing first and second plate surfaces 3a and 3b and, respectively 11a and 11b. The plates 2, 3 and 11 each comprise a carbonized material and together define cooling channels 4 and 12 of the cooling assembly. The channels 4 are defined by the second surface 2b of the first plate 2, which contains cooling gas grooves 5, and the first surface 3a of the second plate 3, which is flat.

By utilization of a flat surface for the surface 3a, contact between the surfaces is increased, in comparison with plates whose surfaces are both grooved and, therefore, exhibit misalignment, which reduces the contact area. Electrical conductivity and gas flow of the assembly is thereby preserved. Additionally, the plate 3 can be provided with process gas channels without concern of creating or aggravating groove misalignment. An overall better cooling assembly is thereby achieved.

The grooves 5, defining with the first surface 3a cooling channels 4, are of a dimension which only partially provide the desired degree of cooling. The remainder of the desired cooling is brought about by a second set of channels 12 realized by cooling grooves 13 in the first surface 2a of the first plate 2 and the flat second surface 11b of the third plate 11. The first surface 11a of the third plate 11 is provided with process gas channels 15 arranged transverse to the channels 7 in the second plate 3.

With the configuration of FIG. 1, the grooves 5 and 13 in the surfaces 2a and 2b can each be shallow. As a result, fabrication difficulties and likelihood of breakage are significantly reduced, while electrical conductivity and gas flow are preserved.

In use, the cooling assembly of FIG. 1 can be supported within a fuel cell stack without adhesive bonding or adhesive bonding may be applied to the sides of the plates across the plate periphery to provide a more secure structure.

## Claims

1. A gas cooler assembly (1) comprising:
a first plate (2) having opposite first (2a) and second (2b) surfaces, said first surface (2a) of said first plate (2) having a plurality of grooves (13) and said second surface (2b) of said first plate (2) having a plurality of grooves (5), said first plate (2) being comprised of a carbonized material and
a second plate (3) having opposite first (3a) and second (3b) surfaces, said first surface (3a) of said second plate (3) being flat and abutting said second surface (2b) of said first plate (2) to define with said grooves (5) of said second surface (2b) of said first plate (2) channels (4) for carrying a cooling gas and said second surface (3b) of said second plate (3) having a plurality of grooves (7) for carrying a process gas, said second plate (3) being comprised of a carbonized material;
characterized by
a third plate (11) having opposite first (11a) and second (11b) surfaces, said second surface (11b) of said third plate (11) being flat and abutting said first surface (2a) of said first plate (2) to define with said grooves (13) of said first surface (2a) of said first plate (2) channels (12) for carrying a cooling gas, said third plate being comprised of a carbonized material.

2. An assembly in accordance with claim 1 wherein:
said first surface (11a) of said third plate (11) has a plurality of grooves (15) for carrying a process gas.

## Revendications

1. Dispositif de refroidissement de gaz (1) comprenant:
une première plaque (2) présentant des première (2a) et seconde (2b) surfaces opposées, ladite première surface (2a) de ladite première plaque (2) présentant une multiplicité de rainures (13) et ladite seconde surface (2b) de ladite première plaque (2) présentant une multiplicité de rainures (5), ladite première plaque (2) comprenant un matériaux carbonisé et

une seconde plaque (3) présentant des première (3a) et seconde (3b) surfaces opposées, ladite première surface (3a) de ladite seconde plaque (3) étant plate et venant en butée sur ladite seconde surface (2b) de ladite première plaque (2) afin de délimiter avec lesdites rainures (5) de ladite seconde surface (2b) de ladite première plaque, des conduits (4) servant à transporter un gaz de refroidissement et ladite seconde surface (3b) de ladite seconde plaque (3) présentant une multiplicité de rainures (7) servant à transporter un gaz opératoire, ladite seconde plaque (3) étant constituée d'un matériau carbonisé;

caractérisé par

une troisième plaque (11) présentant des première (11a) et seconde (11b) surfaces opposées, ladite seconde surface (11b) de ladite troisième plaque (11) étant plate et venant en butée sur ladite première surface (2a) de ladite première plaque (2) afin de délimiter avec lesdites rainures (13) de ladite première surface (2a) de ladite première plaque (2) des conduits (12) servant à transporter un gaz de refroidissement, ladite troisième plaque étant constituée d'un matériau carbonisé.

2. Dispositif selon la revendication 1 dans lequel:

ladite première surface (11a) de ladite troisième plaque (11) présente une multiplicité de rainures (15) servant à transporter un gaz opératoire.

**Patentansprüche**

1. Gaskühlervorrichtung (1) mit
einer ersten Platte (2), die entgegengesetzte erste (2a) und zweite (2b) Oberflächen aufweist, wobei die erste Oberfläche (2a) der ersten Platte (2) eine Mehrzahl von Nuten (13) und die zweite Oberfläche (2b) der ersten Platte (2) eine Mehrzahl von Nuten (5) aufweist und die erste Platte (2) aus karbonisiertem Material besteht und

einer zweiten Platte (3), die entgegengesetzte erste (3a) und zweite (3b) Oberflächen aufweist, wobei die erste Oberfläche (3a) der zweiten Platte (3) eben ist und an der zweiten Oberfläche (2b) der ersten Platte (2) anstößt, um mit den Nuten (5) der zweiten Oberfläche (2b) der ersten Platte (2) Kanäle (4) zur Führung eines Kühlgases zu bilden, die zweite Oberfläche (3b) der zweiten Platte (3) eine Mehrzahl von Nuten (7) zur Führung eines Verfahrensgases aufweist und die zweite Platte (3) aus karbonisiertem Material besteht;

gekennzeichnet durch

eine dritte platte (11), die entgegengesetzte erste (11a) und zweite (11b) Oberflächen aufweist, wobei die zweite Oberfläche (11b) der dritten Platte (11) eben ist und an der ersten Oberfläche (2a) der ersten Platte (2) angrenzt, um mit den Nuten (13) der ersten Oberfläche (2a) der ersten Platte (2) Kanäle (12) zur Führung eines Kühlgases zu bilden, und die dritte Platte aus karbonisiertem Material besteht.

2. Vorrichtung nach Anspruch 1, wobei die erste Oberfläche (11a) der dritten Platte (11) eine Mehrzahl von Nuten (15) Führung eines Verfahrensgases aufweist.

FIG. 1